# FASCICULE DE BREVET EUROPEEN

(11) **EP 0 931 496 B1**
(45) Date de publication et mention de la délivrance du brevet: **07.05.2003**
(21) Numéro de dépôt: 99400018.0
(22) Date de dépôt: 06.01.1999
(51) Int. Cl.: A47J 45/06, A47J 27/62

(54) **Ustensile culinaire comprenant un capteur pour mesurer la température de cet ustensile**
Küchengerät mit einem Temperatursensor zum Messen seiner Temperatur
Kitchen utensil comprising a temperature sensor for measuring its temperature

(30) Priorité: 23.01.1998 FR 9800733
(43) Date de publication de la demande: 28.07.1999
(73) Titulaire: SEB S.A., 69130 Ecully (FR)
(72) Inventeur: Adamczewski, David, 74150 Massingy (FR)
(74) Mandataire: Keib, Gérard

(56) Documents cités:
- EP-A- 0 772 991
- US-A- 5 441 344
- PATENT ABSTRACTS OF JAPAN vol. 016, no. 118 (C-0922), 25 mars 1992 & JP 03 289916 A (MATSUSHITA ELECTRIC IND CO LTD), 19 décembre 1991 & JP 03 289916 A
- PATENT ABSTRACTS OF JAPAN vol. 018, no. 634 (C-1281), 2 décembre 1994 & JP 06 245858 A (TOSHIBA HOME TECHNOL CORP), 6 septembre 1994 & JP 06 245858 A

## Description

La présente invention concerne un ustensile culinaire comprenant une surface chauffante, un capteur pour mesurer la température de cette surface et des moyens pour afficher cette température.

L'invention vise tout ustensile culinaire comportant une surface chauffante chauffée par une source chauffante extérieure à l'ustensile ou intégrée dans celui-ci.

L'invention vise en particulier, mais non limitativement, les ustensiles suivants ; poêles, casseroles, sauteuses, cuiseurs, gril-viandes, gaufriers, barbecues, appareils à raclettes, autocuiseurs, friteuses et analogues.

On connaît notamment par le brevet américain 5 441 344 un ustensile de cuisson comprenant un moyen d'affichage de la température, intégré dans la poignée de l'ustensile.

Le capteur de température est un thermocouple placé dans le fond de l'ustensile relié à un circuit électronique et un écran d'affichage de la température intégrés à la poignée.

L'inconvénient de cet ustensile de cuisson réside dans le fait que l'intégration du thermocouple dans le fond de l'ustensile est compliquée et coûteuse. De plus, les liaisons électriques entre la sonde, le circuit électronique et l'écran d'affichage de la température posent des difficultés en raison de l'humidité à laquelle est exposé l'ustensile, surtout lors de son lavage et des cycles thermiques répétitifs.

On connaît aussi le document JP 03-289 916 divulguant un dispositif de chauffe comprenant une surface chauffante destinée à recevoir des utensiles culinaires, et un capteur infra-rouge disposé à environ 2 mètres de la surface chauffante et auquel est associé un témoin lumineux qui est disposé à proximité de la surface chauffante.

Toutefois, dans un tel dispositif, le capteur est porté par un bras long de 2 mètres de façon à être bien au-dessus de la surface chauffante, ce qui, outre son caractère peu esthétique et encombrant, peut compliquer la réalisation du dispositif et s'avérer gênant pour l'utilisateur. De plus, ce dispositif ne permet pas de mesurer la température, mais uniquement d'indiquer qu'une certaine température critique a été atteinte.

Le but de la présente invention est de remédier aux inconvénients de la réalisation précitée.

L'invention vise ainsi un ustensile culinaire comprenant une surface chauffante de cuisson, un capteur pour mesurer la température de cette surface chauffant de cuisson et des moyens pour afficher cette température.

Suivant l'invention, cet ustensile est caractérisé en ce que ledit capteur pour mesurer la température est un capteur infra-rouge disposé en un endroit de l'ustensile tel qu'il puisse recevoir le rayonnement infra-rouge émis par ladite surface chauffante de cuisson, ledit capteur étant relié à un circuit électronique capable de transformer la variation du rayonnement infra-rouge causée par l'échauffement de l'ustensile en un signal électrique.

Ce capteur capte directement, ou après réflexion le rayonnement infra-rouge émis par la surface chauffante et ne nécessite aucune modification de l'ustensile de cuisson pour l'intégrer à celui-ci.

La longueur d'onde du rayonnement infra-rouge émis par la surface chauffante varie en fonction de la température. Il suffit donc de convertir cette variation de la longueur d'onde en un signal électrique et de convertir celui-ci en valeur de la température.

De préférence, ledit capteur infra-rouge est fixé sur la poignée de l'ustensile, notamment lorsque celui-ci est constitué par une poêle, une casserole ou analogues.

De préférence également, le capteur infra-rouge est placé dans un boîtier fermé faisant saillie sur la face de la poignée dirigée vers le haut.

Ce boîtier protège le capteur à l'égard du milieu environnant et en particulier à l'égard de l'eau. Le fait qu'il fasse saillie sur la face de la poignée dirigée vers le haut, lui permet d'être exposé au rayonnement infra-rouge émis par la surface de cuisson.

Selon une version avantageuse de l'invention, ledit boîtier est fixé de façon détachable sur la poignée de l'ustensile. Il est ainsi possible d'enlever ce boîtier avant d'introduire l'ustensile dans un lave-vaisselle.

D'autres particularités et avantages de l'invention apparaîtront encore dans la description ci-après.

Aux dessins annexés donnés à titre d'exemples non limitatifs:
- la figure 1 est une vue en coupe d'une poêle équipée d'un capteur de température conforme à l'invention;
- la figure 2 est une vue en coupe du boîtier renfermant le capteur de température captant après réflexion le rayonnement infra-rouge;
- la figure 3 est une vue en coupe du boîtier renfermant le capteur de température captant directement le rayonnement infra-rouge;
- la figure 4 est une vue analogue à la figure 1 montrant que le boîtier est détachable de la poignée.

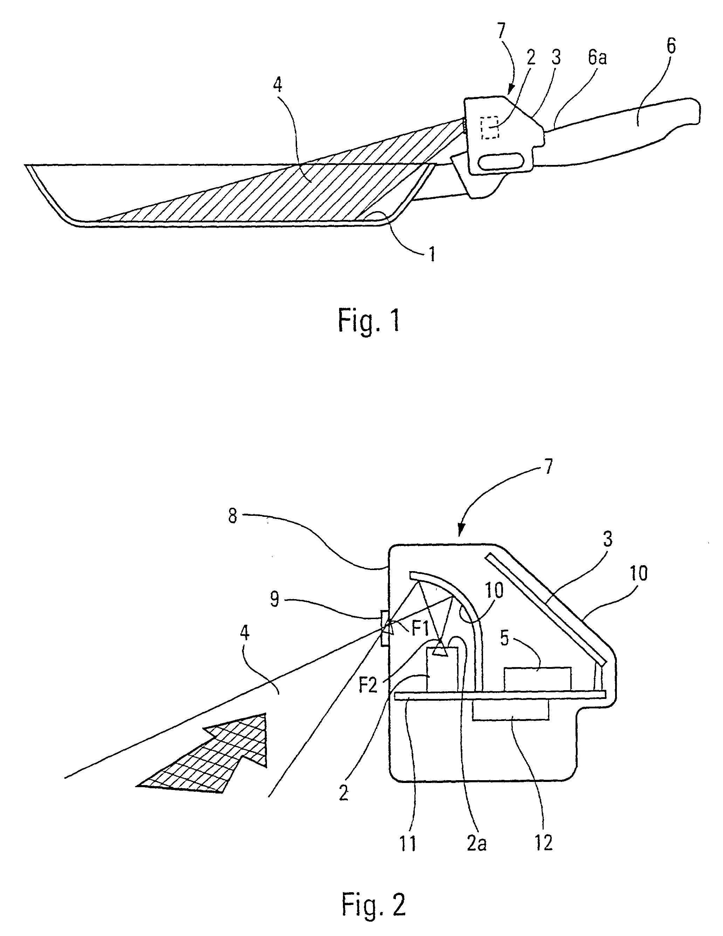

Dans la réalisation de la figure 1, l'ustensile de cuisson constitué par une poêle comprend une surface de cuisson 1, un capteur 2 pour mesurer la température de cette surface 1 ét des moyens 3 pour afficher cette température.

Conformément à l'invention, le capteur 2 pour mesurer la température est un capteur infra-rouge disposé en un endroit de l'ustensile tel qu'il puisse recevoir le rayonnement infra-rouge 4 émis par la surface de cuisson 1.

Le capteur infra-rouge 2 est relié (voir figure 2) à un circuit électronique 5 capable de transformer la longueur d'onde du rayonnement infra-rouge 4 en un signal électrique fonction de la température.

Dans l'exemple illustré par la figure 1, le capteur infra-rouge 2 est fixé sur la poignée 6 de l'ustensile.

Par ailleurs, le capteur infra-rouge 2 est placé dans un boîtier fermé 7 faisant saillie sur la face 6a de la poignée 6 dirigée vers le haut.

Comme indiqué sur la figure 2, le boîtier 7 comprend une face 8 dirigée vers la surface de cuisson 1 équipée d'une fenêtre transparente 9 au rayonnement infra-rouge 4. Une surface réfléchissante elliptique 10 est située sur le trajet du rayonnement infra-rouge 1 ayant traversé la fenêtre 9. Cette dernière est située vers l'un des foyers F₁ de la surface réfléchissante elliptique 10. La face d'entrée 2a du capteur infra-rouge 2 est située sur l'autre foyer F₂ de la surface réfléchissante elliptique 10.

On voit également sur la figure 2 que le boîtier 7 comprend à l'opposé de la face 8 dirigée vers la surface de cuisson 1, une face transparente 10 derrière laquelle se situe un écran 3 d'affichage de la température.

Par ailleurs, le boîtier 7 renferme un support 11 qui porte le capteur infra-rouge 2, la surface réfléchissante elliptique 10, le circuit électrique 5 de transformation de la longueur d'onde du rayonnement infra-rouge, l'écran 3 d'affichage de la température et une pile 12 d'alimentation électrique dudit circuit électronique.

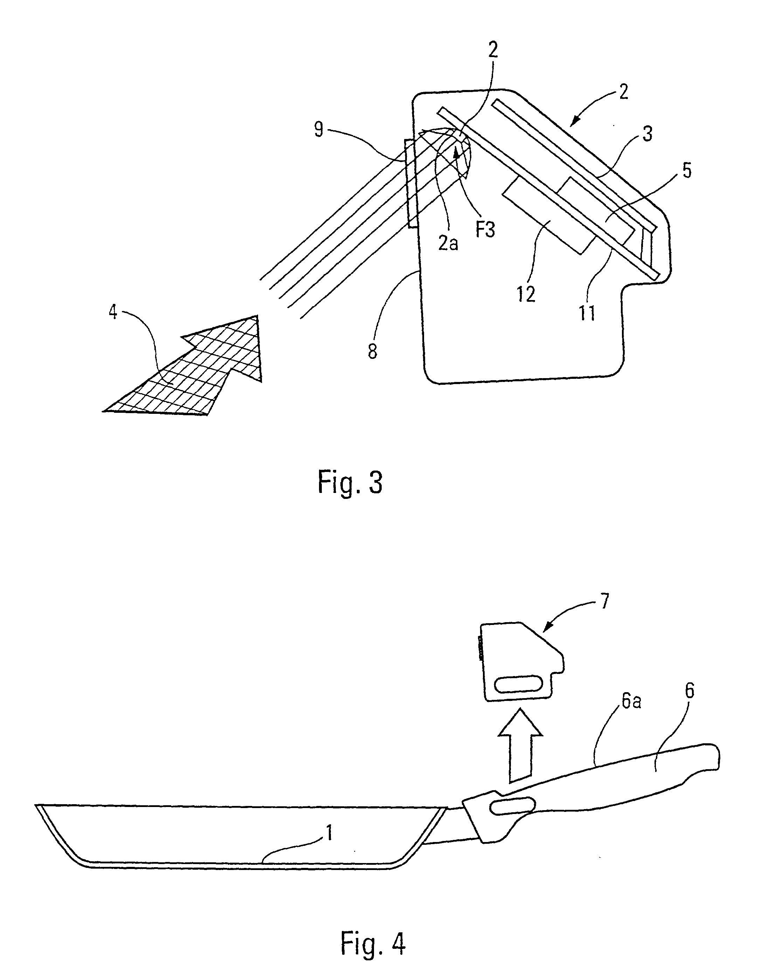

Dans la réalisation de la figure 3, le boîtier 7 comprend une face 8 dirigée vers la surface de cuisson 1, équipée d'une fenêtre 9 transparente au rayonnement infra-rouge 4, une surface réfléchissante parabolique 10a située sur le trajet du rayonnement infra-rouge 4 ayant traversé la fenêtre 9.

La face d'entrée 2a du capteur infra-rouge 2 est située sur le foyer F₃ de ladite surface parabolique 10a.

La surface parabolique 10a capte ainsi directement le rayonnement infra-rouge et concentre celui-ci sur le capteur 2 situé sur le foyer F₃ de cette surface parabolique 10a.

De préférence, ledit boîtier 7 (voir figure 4) est fixé de façon détachable sur la poignée 6 de l'ustensile, ce qui permet d'enlever ce boîtier 7 avant d'introduire la poêle dans un lave-vaisselle.

De la description qui précède il ressort que l'ustensile selon l'invention présente les principaux avantages suivants :
- le capteur de température ne nécessite ni modification de la poêle pour son incorporation, ni connexions électriques sensibles à l'humidité ;
- le boîtier 7 protège le capteur et ses accessoires électriques contre l'humidité et peut être détaché avant lavage pour éviter tout risque de dégradation;
- Un seul boîtier pouvant être adapté à toute une gamme d'ustensiles.

Dans le cas où l'ustensile culinaire comporte une résistance électrique pour chauffer sa surface chauffante, le capteur 2 peut être associé à des moyens pour réguler la puissance de chauffe de la résistance électrique afin de maintenir la surface chauffante à une température sensiblement constante.

Bien entendu, l'invention n'est pas limitée à l'exemple d'ustensile de cuisson tel que décrit, mais peut s'appliquer à tout ustensile ou appareil culinaire ayant une surface chauffante, tel qu'indiqué dans l'introduction de la présente description, et tout en restant dans le cadre des présentes revendications.

## Revendications

1. Ustensile culinaire comprenant une surface chauffante de cuisson (1), un capteur (2) pour mesurer la température de cette surface chauffante de cuisson (1) et des moyens (3) pour afficher cette température, **caractérisé en ce que** ledit capteur (2) pour mesurer la température est un capteur infra-rouge disposé en un endroit de l'ustensile tel qu'il puisse recevoir le rayonnement infra-rouge (4) émis par ladite surface chauffante de cuisson (1), ledit capteur (2) étant relié à un circuit électronique (5) capable de transformer la variation du rayonnement infra-rouge causée par l'échauffement de l'ustensile en un signal électrique.

2. Ustensile conforme à la revendication 1, **caractérisé en ce que** ledit capteur infra-rouge (2) est fixé sur la poignée (6) de l'ustensile.

3. Ustensile conforme à la revendication 2, **caractérisé en ce que** le capteur infra-rouge est placé dans un boîtier (7) fermé, faisant saillie sur la face (6a) de la poignée (6) dirigée vers le haut.

4. Ustensile conforme à la revendication 3, **caractérisé en ce que** ledit boîtier (7) comprend une face (8) dirigée vers la surface de cuisson (1) équipée d'une fenêtre ( 9) transparente au rayonnement infra-rouge (4), une surface réfléchissante elliptique (10) située sur le trajet du rayonnement infra-rouge (4) ayant traversé ladite fenêtre (9), cette dernière étant située sur l'un (F₁) des foyers de ladite surface réfléchissante elliptique (10) et la face d'entrée (2a) du capteur infra-rouge (2) étant située sur l'autre foyer (F₂) de ladite surface réfléchissante elliptique (10).

5. Ustensile conforme à la revendication 3, **caractérisé en ce que** ledit boîtier (7) comprend une face (8) dirigée vers la surface de cuisson (1), équipée d'une fenêtre (9) transparente au rayonnement infra-rouge (4), une surface réfléchissante parabolique (10a) située sur le trajet du rayonnement infra-rouge (4) ayant traversé la fenêtre (9), la face d'entrée (2a) du capteur infra-rouge (2) étant située sur le foyer (F₃) de ladite surface parabolique (10a).

6. Ustensile conforme à l'une des revendications 4 ou 5, **caractérisé en ce que** boîtier (7) comprend à l'opposé de ladite face (8) dirigée vers la surface de cuisson (1), une face transparente (10) derrière laquelle se situe un écran (3) d'affichage de la température.

7. Ustensile conforme à la revendication 6, **caractérisé en ce que** le boîtier (7) renferme le support (11) qui porte le capteur infra-rouge (2), la surface réfléchissante (10) (10a), le circuit électronique (5) de transformation de la variation du rayonnement infra-rouge (4), l'écran (3) d'affichage de la température et une pile (12) d'alimentation électrique dudit circuit électronique (5).

8. Ustensile conforme à l'une des revendications 3 à 7, **caractérisé en ce que** ledit boîtier (7) est fixé de façon détachable sur la poignée (6) de l'ustensile.

9. Ustensile conforme à l'une des revendications 1 à 8, comprenant une résistance électrique pour chauffer la surface chauffante, **caractérisé en ce que** ledit capteur (2) est associé à des moyens pour réguler la puissance de chauffe de la résistance et la température de la surface chauffante.

## Claims

1. A cooking utensil comprising a heating cooking surface (1), a sensor (2) for measuring the temperature of said heating cooking surface (1) and means (3) for displaying said temperature, **characterised in that** the said sensor (2) for measuring the temperature is an infra-red sensor disposed at a location of the utensil such that it can receive the infra-red radiation (4) emitted by said heating cooking surface (1), said sensor (2) being connected to an electronic circuit (5) capable of converting into an electric signal the variation in the infrared radiation caused by the heating of the utensil.

2. A utensil according to claim 1, **characterised in that** the said infra-red sensor (2) is fixed on the handle (6) of the utensil.

3. A utensil according to claim 2, **characterised in that** the infra-red sensor is disposed in a closed casing (7) projecting from the upwardly directed surface (6a) of the handle (6).

4. A utensil according to claim 3, **characterised in that** the said casing (7) comprises a surface (8) directed towards the cooking surface (1) equipped with a window (9) transparent to the infra-red radiation (4), an elliptical reflecting surface (10) situated on the path of the infra-red radiation (4) after it has passed through said window (9), said latter being situated on one (F₁) of the foci of the said elliptical reflecting surface (10) and the entry surface (2a) of the infra-red sensor (2) being situated on the other focus (F₂) of said elliptical reflecting surface (10).

5. A utensil according to claim 3, **characterised in that** the said casing (7) comprises a surface (8) directed towards the cooking surface (1) equipped with a window (9) transparent to the infra-red radiation (4), a parabolic reflecting surface (10a) situated on the path of the infra-red radiation (4) after it has traversed the window (9), the entry surface (2a) of the infra-red sensor (2) being situated on the focus (F₃) of said parabolic surface (10a).

6. A utensil according to claim 4 or 5, **characterised in that** the casing (7) comprises a transparent surface (10) remote from the surface (8) directed towards the cooking surface (1), a screen (3) for displaying the temperature being situated behind said transparent surface (10).

7. A utensil according to claim 6, **characterised in that** the casing (7) contains the support (11) which carries the infra-red sensor (2), the reflecting surface (10) (10a), the electronic circuit (5) for converting the variation of the infra-red radiation (4), the screen (3) for displaying the temperature and a battery (12) for the electric supply to the said electronic circuit (5).

8. A utensil according to any one of claims 3 to 7, **characterised in that** said casing (7) is detachably fixed to the handle (6) of the utensil.

9. A utensil according to any one of claims 1 to 8, comprising an electric resistance for heating the heating surface, **characterised in that** said sensor (2) is associated with means for controlling the heating power of the resistance and the temperature of the heating surface.

## Patentansprüche

1. Küchengerät mit einer Heizfläche (1), einem Sensor (2) zum Messen der Temperatur dieser Koch-Heizfläche (1) sowie mit Mitteln (3) zum Anzeigen dieser Temperatur, **dadurch gekennzeichnet, dass** dieser Sensor (2) zum Messen der Temperatur ein Infrarot-Sensor ist, der an einer Stelle in des Geräts angeordnet ist, an der er die von der Koch-Heizfläche (1) abgegebene Infrarotstrahlung (4) empfangen kann, wobei dieser Sensor (2) mit einem Elektronikschaltkreis (5) verbunden ist, der die durch das Erhitzen des Geräts verursachte Veränderung der Infrarotstrahlung in ein elektrisches Signal umwandeln kann.

2. Gerät nach Anspruch 1, **dadurch gekennzeichnet, dass** dieser Infrarot-Sensor (2) an dem Handgriff (6) des Geräts angeordnet ist.

3. Gerät nach Anspruch 2, **dadurch gekennzeichnet, dass** der Infrarot-Sensor (2) in einem geschlossenen Gehäuse (7) angeordnet ist, das über die nach oben gerichtete Seite (6a) des Handgriff (6) hinausragt.

4. Gerät nach Anspruch 3, **dadurch gekennzeichnet, dass** dieses Gehäuse (7) eine Seite (8) aufweist, die der Kochfläche (1) zugewandt ist und mit einem für Infrarotstrahlung (4) durchlässigen Fenster (9) versehen ist, sowie eine elliptische, reflektierende Fläche (10) aufweist, die sich in der Bahn der durch das Fenster (9) gelangten Infrarotstrahlung (4) befindet, wobei sich letzteres in dem einen Brennpunkt (F₁) dieser elliptischen, reflektierenden Fläche (10) und die Eintrittsfläche (2a) des Infrarot-Sensors (2) sich in dem anderen Brennpunkt (F₂) dieser elliptischen, reflektierenden Fläche (10) befindet.

5. Gerät nach Anspruch 3, **dadurch gekennzeichnet, dass** dieses Gehäuse (7) eine Seite (8) aufweist, die der Kochfläche (1) zugewandt ist und mit einem für Infrarotstrahlung (4) durchlässigen Fenster (9) versehen ist, sowie eine parabolische, reflektierende Fläche (10a) aufweist, die sich in der Bahn der durch das Fenster (9) gelangten Infrarotstrahlung (4) befindet, wobei sich die Eintrittsfläche (2a) des Infrarot-Sensors (2) in dem anderen Brennpunkt (F₃) dieser parabolischen Fläche (10a) befindet.

6. Gerät nach Anspruch 4 oder 5, **dadurch gekennzeichnet, dass** das Gehäuse (7) gegenüber der der Kochfläche (1) zugewandten Seite (8) eine lichtdurchlässige Seite (10) aufweist, hinter der sich ein Anzeigefeld (3) für die Temperatur befindet.

7. Gerät nach Anspruch 6, **dadurch gekennzeichnet, dass** das Gehäuse (7) die Halterung (11) umschließt, auf der der Infrarot-Sensor (2), die reflektierende Fläche (10; 10a), der Elektronikschaltkreis (5), der die Veränderung der Infrarotstrahlung (4) umwandelt, das Temperaturanzeigefeld (3) und eine Batterie (12) zur Stromversorgung des Elektronikschaltkreises (5) sitzen.

8. Gerät nach einem der Ansprüche 3 bis 7, **dadurch gekennzeichnet, dass** das Gehäuse (7) abnehmbar an dem Handgriff (6) des Geräts befestigt ist.

9. Gerät nach einem der Ansprüche 1 bis 8, die einen elektrischen Widerstand zum Heizen der Heizfläche umfasst, **dadurch gekennzeichnet, dass** der Sensor (2) mit Mitteln zum Regeln der Heizleistung des Widerstands und der Temperatur der Heizfläche verbunden ist.
